# EUROPÄISCHE PATENTSCHRIFT

(11) **EP 2 989 897 B1**
(45) Veröffentlichungstag und Bekanntmachung des Hinweises auf die Patenterteilung: **21.02.2018**
(21) Anmeldenummer: 14182971.3
(22) Anmeldetag: 30.08.2014
(51) Int. Cl.: A23C 7/04, A23C 9/142, A23C 9/146, A23C 19/05, A23C 1/14, B01D 61/02, B01D 61/14, B01D 63/08, B01D 63/10, B01D 71/06, A23C 19/00, B01D 71/68

(54) **Verfahren zur Herstellung von farbloser Kesselmilch**
Process for making colourless cheese dairy milk
Procedé pour la préparation de lait de fromage incolore

(43) Veröffentlichungstag der Anmeldung: 02.03.2016
(73) Patentinhaber: DMK Deutsches Milchkontor GmbH, 27404 Zeven (DE)
(72) Erfinder: Döring, Sven-Rainer, 27404 Mönchengladbach (DE)
(74) Vertreter: Fabry, Bernd

(56) Entgegenhaltungen:
- EP-A2- 0 249 368
- WO-A2-99/15023
- US-A- 3 907 777
- DATABASE WPI Week 198009 Thomson Scientific, London, GB; AN 1980-15915C XP002731623, & NL 7 808 199 A (NED INST ZUIVELONDE) 6. Februar 1980 (1980-02-06)

## Beschreibung

### GEBIET DER ERFINDUNG

Die Erfindung befindet sich auf dem Gebiet der Molkereierzeugnisse und betrifft ein Verfahren zur Herstellung von farbloser Kesselmilch als Ausgangsstoff zur Herstellung von farblosem Käse.

### STAND DER TECHNIK

Milcherzeugnisse zählen in Europa, Nordamerika und Australien zu den Grundnahrungsmitteln. Käse ist dabei besonders im westlichen Kulturkreis verbreitet. Man geht von bis zu 5000 Käsesorten aus, wobei sich auch Käse gleicher Sortenbezeichnung von Käserei zu Käserei unterscheiden. Das Land mit der größten Käseproduktion weltweit sind die USA. In Ostasien, Afrika und Südamerika spielt Käse eine untergeordnete Rolle. Ein Grund hierfür liegt in der weitverbreiteten Laktoseintoleranz der Bevölkerung.

Für die Herstellung von einem Kilogramm Käse werden je nach Käsetyp zwischen 4 und 16 Liter Milch benötigt. Anhand des Herstellungsverfahrens lassen sich vier Arten unterscheiden:
- Sauermilchkäse,
- Süßmilch- oder Labkäse,
- Molkeneiweißkäse und
- Molkenkäse

Bei konventionellem Käse wird die Milch zunächst auf bis zu 75 Grad erhitzt und in der Bakterifuge von Sporen befreit. Im nächsten Schritt wird die auf diese Weise erhaltene Kessel- oder Käsereimilch dickgelegt. Das geschieht durch Zugabe von Milchsäurebakterien (für Frischkäse und Sauermilchkäse) und/oder Lab (für Hartkäse, Schnittkäse und Weichkäse); hier werden auch Calciumchlorid und Pigmente zugesetzt. Ist die Milch fest, wird die Masse mit einer Käseharfe in kleine Stücke zerteilt: der sogenannte Käsebruch entsteht. Je kleiner die Teile werden, desto besser fließt die flüssige Molke ab und desto härter wird später der Käse. Hat der Bruch eine entsprechende Konsistenz erreicht, wird sie abgeschöpft und in Form gebracht.

Anschließend muss der Käse je nach Sorte unterschiedlich lange reifen, um sein typisches Aroma und Aussehen zu entwickeln. Während seiner Reifezeit werden die Laibe regelmäßig gewendet und mit Salz bestrichen. Das Salz entzieht dem Käse Feuchtigkeit, so dass eine feste Rinde entsteht. Gleichzeitig konserviert Salz den Käse und trägt zu seinem Geschmack bei.

Sauermilchkäse entsteht, wenn Milch durch Milchsäurebakterien gesäuert und dadurch das Milcheiweiß (Kasein) ausgefällt wird. Dieser Vorgang wird als Dicklegen bezeichnet. Das ausgefällte Kasein wird von der Flüssigkeit, der Molke, getrennt und ist der sogenannte Frischkäse. Daraus kann gereifter Sauermilchkäse erzeugt werden, der durch besondere Bakterienkulturen (Rotschmiere) oder Edelschimmelverfeinert werden kann.

Bei der Herstellung von Labkäse (auch Süßmilchkäse genannt) wird das Milcheiweiß Kasein durch ein Enzymgemisch aus Pepsin und Chymosin ausgefällt. Die Eigenschaft vom Lab, das Milcheiweiß Kasein so zu spalten, dass die Milch eindickt, ohne sauer zu werden, wurde schon im Altertum erkannt und für Käseerzeugung nutzbar gemacht. Die meisten bekannten Hart- oder Schnittkäsearten kommen aus der Süßmilchgerinnung. Auch Frischkäse, der zwar typischerweise durch Sauermilchgerinnung unter Zuhilfenahme von Milchsäurebakterien hergestellt wird, kann unter Verwendung von Lab hergestellt werden.

Rohmilch, die in der oben beschrieben Weise zur Kessel- oder Käsereimilch aufbereitet worden ist weist jedoch einen hohen Gehalt an Riboflavin (I) auf.

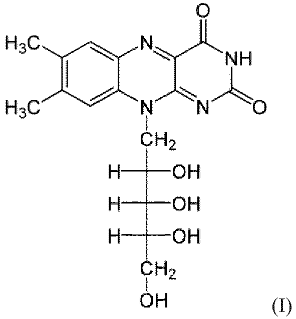

Riboflavin, das auch in Gemüse wie Broccoli, Roggen, Spargel oder Spinat, außerdem in Fisch, Muskelfleisch, Eiern und Vollkornprodukten vorkommt, ist auch als Lactoflavin oder Vitamin B2 bekannt. Es handelt sich um ein Derivat des Pteridin, genauer des Isoalloxazins und des Zuckeralkohols Ribitol. Riboflavin dient als Vorstufe für Flavin-Koenzyme (FAD, FMN), die insbesondere in Oxidoreduktasen, z. B. NADH-Dehydrogenase, eine große Rolle spielen. Dadurch nimmt es im Stoffwechsel eine zentrale Rolle ein. Wegen seiner gelben Farbe wird Riboflavin auch als Lebensmittelfarbstoff (E101) eingesetzt.

Obwohl Riboflavin also grundsätzlich ein interessanter Naturstoff mit einer Vielzahl von Anwendungen ist, ist er als Milchbestandteil unerwünscht, da er dieser einen deutlichen Gelbstich verleiht, der sich bei der Herstellung von Käse aus dieser Milch noch vertieft. Auch wenn diese Färbung für das Käsearoma und die Bekömmlichkeit keine Rolle spielt, werden von vielen Verbrauchern jedoch Käse bevorzugt, die praktisch farblos sind und allenfalls eine sehr geringe Gelbfärbung aufweisen.

Das Dokument WO 99/15023 A2 offenbart ein Adsorption-Prozess zur Trennung einer Substanz (z.B. Riboflavin) aus einer Lösung (z.B. Vollmilch, Magermilch, Rahm, Molke, Molkepermeat oder Kolostrum). Dabei wird die Lösung mit einem Harz, das Teilchen mit magnetischen Eigenschaften aufweist (z.B. Magnesiumsilikat), behandelt, wobei die zu trennende Substanz sich an das Harz bindet. Schließlich wird die zu trennende Substanz mittels An-wendung eines geeigneten Desorptionsmittles freigesetzt.

Das Dokument EP 0 249 368 A2 betrifft ein Verfahren zur Gewinnung von Lactosekristalle aus laktosereichen Flüssigkeiten, wie z.B. Molke, Milch oder Magermilch, obwohl Molke bevorzugt wird. Nach dem beschriebenen Verfahren wird pasteurisierte Molke einer Ultrafiltration unterworfen. Das gewonnene Permeat wird dann einer Umkehrosmose unterworfen. Das Umkehrosmose-Permeat wird dann einer Klärung durch Zentrifugation unterworfen, und das erhaltene Permeat mittels Elektrodialyse bzw. Ionenaustauscher demineralisiert. Riboflavin wird dann durch ein Adsorptionsverfahren an Aktivkohle aus dem demineralisierten Permeat entfernt. Nach einem zusätzlichen Filtrationsschritt wird einen Sirup gewonnen, aus dem sich Laktose kristallisieren lässt.

Das Dokument NL 7 808 199 A offenbart die Umkehrosmose eines Ultrafiltration-Permates (aus Milk oder Molke). Weder die Abtrennung noch die Wiedergewinnung von Riboflavin wird in diesem Dokument offenbart.

Das Dokument US 3 907 777 A betrifft ein Verfahren zur Entfernung von Riboflavin aus Molke. Das offenbarte Verfahren ist dadurch gekennzeichnet, dass man Molke mit einem Gesamtfeststoffgehalt von 6,2-25% bei einer Temperatur unter 70 °C bis Raumtemperatur durch eine Kolonne leitet, die mit granularer Aktivkohle gefüllt ist, um das Riboflavin in der Molke an der granularen Aktivkohle zu adsorbieren, und die granulare, mit Riboflavin gesättigte Aktivkohle für eine erneute Verwendung regeneriert, indem man alternierend eine wässrige Natriumhydroxyd Lösung und Wasser hindurchleitet.

Bisherige Verfahren zur Abtrennung des Riboflavins haben sich entweder als zu aufwendig oder als zu ineffizient erwiesen. Stattdessen werden zur Herstellung von farblosem Käse der Kesselmilch Weißpigmente, speziell Titandioxid zugesetzt, was vor dem Hintergrund, das Käse ein natürliches Produkt darstellt, an sich unerwünscht ist.

Die Aufgabe der vorliegenden Erfindung hat somit darin bestanden, Kesselmilch in einfacher Weise vorzubehandeln und von dem farbgebenden Riboflavin zu befreien, so dass diese unmittelbar zur Herstellung von farblosem, d.h. nicht-gelbem Käse verwendet werden kann. Insbesondere sollte die Mitverwendung von Weißpigmente überflüssig werden. Eine zweite Aufgabe der Erfindung ist darin zu sehen, das wertvolle Riboflavin aus der Milch zu isolieren, um es anschließend industriell weiter verwenden zu können.

### BESCHREIBUNG DER ERFINDUNG

Gegenstand der Erfindung ist ein Verfahren zur Herstellung von farbloser Kesselmilch, bei dem man
(a) Kesselmilch einer Ultrafiltration unterwirft und dabei ein erstes Permeat P1 und ein erstes Retentat R1 herstellt, wobei man die Ultrafiltration mit Hilfe von Membranen durchführt, die einen Porendurchmesser von 5.000 bis 50.000 Dalton aufweisen,
(b) das Permeat P1 einer Umkehrosmose unterwirft und dabei ein zweites Permeat P2 und ein zweites Retentat R2 herstellt, wobei man die Umkehrosmose mit semipermeablen Membranen durchgeführt, die eine Trennschärfe von 10 bis 1.000 Dalton aufweisen,
(c) das zweite Retentat R2 mit einem Adsorptionsmittel behandelt und dabei ein weiteres Retentat R2* herstellt,
(d) das so erhaltene Retentat R2* mit dem Retentat R1 und dem Permeat P2 vereinigt.

Überraschenderweise wurde gefunden, dass durch Kombination von Ultrafiltration, Umkehrosmose und Adsorptionsverfahren das farbgebende Riboflavin der Kesselmilch praktisch vollständig entzogen werden kann, so dass auf einfache Weise ein Ausgangsstoff erhalten wird, der ohne weitere Maßnahmen, insbesondere ohne Zusatz von Pigmenten, zur Herstellung von farblosem Käse genutzt werden kann. Das wertvolle Riboflavin kann indes durch einfache Desorption in hoher Reinheit isoliert werden.

### KESSELMILCH

Unter der Bezeichnung Kessel- oder Käsereimilch wird eine Rohmilch bezeichnet, die nach Pasteurisierung und Fetteinstellung zur Herstellung von Käse, aber auch Joghurt, dickgelegt werden soll. Da die Käseherstellung früher überwiegend in Kesseln durchgeführt wurde - was heute teilweise auch noch für die Herstellung von Parmesan typisch ist - wird auch synonym von Kesselmilch gesprochen.

Damit Rohmilch für die Herstellung von Käse eingesetzt werden kann, muss sie gesetzlichen Anforderungen entsprechen, die in der Käseverordnung niedergelegt sind. Üblicherweise beginnt der Verarbeitungsprozess mit einer Erhitzung der Rohmilch durch Wärmeaustausch mit Wärmeträgermedien bei gleichzeitiger teilweiser Wärmerückgewinnung. Die Separation in Magermilch, Rahm und Separatorschlamm wird üblicherweise in einer Pasteurisierungseinheit mit integriertem Separator durchgeführt. Dabei wird die Erhitzung so weit getrieben, dass eine erste Thermisierung oder Pasteurisierung stattfindet. Nach ihrer anschließenden Standardisierung wird die standardisierte Milch in einem Tank vorgestapelt und die aus dem Tank abgezogene vorgestapelte Milch üblicherweise durch erneute Erhitzung einer zweiten Pasteurisierung unterzogen und dann über eine Bakterofuge geleitet, um die Keimzahl so weit zu reduzieren, wie dies aus produktionstechnischen und gesetzlichen Erfordernissen notwendig ist.

Die Wärmebehandlung der Rohmilch ("Entkeimung") erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von 70 bis 80 °C und insbesondere 72 bis 74 °C erhitzt wird.

Die Abtrennung von Feststoffen ("Käsestaub") sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milchmolke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### ULTRAFILTRATION

Unter dem Begriff Ultrafiltration wird eine Filtration durch Membranen mit einer Porengröße < 0,1 µm verstanden, während eine Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 10 kPa und 1000 kPa (0.1 bar und 10 bar) liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Ultrafiltration erfolgt vorzugsweise bei Temperaturen im Bereich von 10 bis 55, vorzugsweise 12 bis 20 °C, wobei die Membranen einen Porendurchmesser im Bereich von 5.000 bis 50.000 und vorzugsweise 5.000 bis 25.000 Dalton besitzen. Vorzugsweise handelt es sich um so genannte Spiralwickelmembranen oder Platte-Rahmen-Module aus Polysulfon oder Polyethylenmembranen.

### UMKEHROSMOSE

Die Umkehrosmose stellt ein Verfahren dar, bei dem die Entwässerung des Einsatzstoffes unter Einsatz einer halbdurchlässigen (semipermeablen) Membran erfolgt wodurch die Konzentration an wertvollen Milchproteinen erhöht wird. Das Prinzip besteht darin, das System einem Druck auszusetzen, der höher als der Druck ist, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Milch hat einen osmotischen Druck von weniger als 200 kPa (2 bar), der angewendete Druck für die Umkehrosmose von Milch beträgt 300 kPa bis 3000 kPa (3 bar bis 30 bar) je nach verwendeter Membran und Anlagenkonfiguration. Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die Milchproteine zurückgehalten werden. Im Gegensatz zu einem klassischen Membranfilter verfügen Osmosemembranen nicht über durchgehende Poren. Die Umkehrosmose wird vorzugsweise bei einer Temperatur im Bereich von 10 bis 55, vorzugsweise 10 bis 20 °C mit semipermeablen Membranen durchgeführt, die eine Trennschärfe von 10 bis 1.000 Dalton aufweisen.

### ADSORPTION

Die Adsorption des im Retentat R2 gelösten Riboflavins kann in an sich bekannter Weise erfolgen, beispielsweise durch Durchleiten des Retentats über ein Festbett mit einem Adsorptionsmittel oder unter Einsatz einer mit einem Adsorptionsmittel bestückten Säule zur Fest-Flüssig Adsorption. Als Adsorptionsmittel eignen sich zum einen typische lonenaustauscherharze, wie z.B. Lewatit-Harze, bevorzugt ist jedoch die Adsorption an Aktivkohle. Üblicherweise wird die Adsorption bei Temperaturen im Bereich von 10 bis 55 °C und insbesondere 12 bis 20 °C durchgeführt.

Die Adsorption des Riboflavins ist bei geeigneter Menge an Adsorptionsmittel bzw. ausreichender Wegstrecke praktisch quantitativ. Auch wenn Mengen und Wegstrecken für den Fachmann leicht selbst zu ermitteln sind, ohne hierzu erfinderisch tätig werden zu müssen, besteht doch eine bevorzugte Ausführungsform darin, eine Säule mit einem Durchmesser von etwa 10 cm und einer Länge von etwa 100 cm mit Aktivkohle (Körnung z.B. D50 = 1 mm) zu befüllen und das Retentat R2 mit einer Durchflussgeschwindigkeit von 10 bis 25 L/h darüber zu geben.

### RIBOFLAVIN ISOLIERUNG

Ein weiterer Gegenstand der Erfindung betrifft ein Verfahren zur Gewinnung von Riboflavin, bei dem man
(a) Kesselmilch einer Ultrafiltration unterwirft und dabei ein erstes Permeat P1 und ein erstes Retentat R1 herstellt, wobei man die Ultrafiltration mit Hilfe von Membranen durchführt, die einen Porendurchmesser von 5.000 bis 50.000 Dalton aufweisen,
(b) das Permeat P1 einer Umkehrosmose unterwirft und dabei ein zweites Permeat P2 und ein zweites Retentat R2 herstellt, wobei man die Umkehrosmose mit semipermeablen Membranen durchgeführt, die eine Trennschärfe von 10 bis 1.000 Dalton aufweisen,
(c) das zweite das Riboflavin enthaltende Retentat R2 mit einem Adsorptionsmittel behandelt und dabei ein weiteres Retentat R2* herstellt, wobei man als Adsorptionsmittel Aktivkohle einsetzt, und
(d) das Adsorptionsmittel mit einem geeigneten Desorptionsmittel behandelt, die darin gelöste Menge an Riboflavin desorbiert und durch Abtrennen des Desorptionsmittels isoliert.

Bei dem Adsorptionsmittel handelt es sich wie oben bereits erläutert um Aktivkohle. Zur Desorption eignen sich vorzugsweise polare Lösungsmittel wie Ethanol oder Isopropylalkohol, die anschließend beispielsweise am Rotationsverdampfer wieder schonend entfernt werden können, so dass man das Riboflavin als gelben bis orange gefärbten Rückstand praktisch quantitativ erhält.

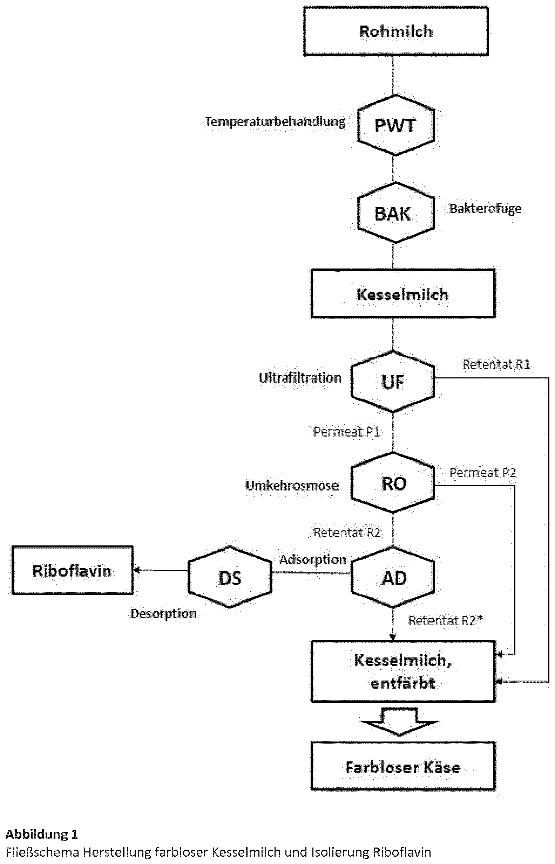

Das Verfahren ist im Fließbild gemäß **Abbildung 1** noch einmal zusammengefasst.

### BEISPIELE

### BEISPIEL 1

100 L Rohmilch wurden in einem Plattenwärmeaustauscher für 10 Sekunden bis auf 75 °C erhitzt, pasteurisiert und anschließend in einer Bacterofuge entkeimt. Die so erhaltene Kesselmilch wurde dann bei 18 °C unter Einsatz einer Sulfon-Spiralwickelmembran mit einem Porendurchmesser von 20.000 Dalton einer Ultrafiltration unterworfen. Das Retentat R1 wurde in einen Zwischentank gefahren und das Permeat P1 bei 20 °C einer Umkehrosmose unter Einsatz einer semipermeablen Membran mit einer Trennschärfe von 500 Dalton unterworfen. Das Permeat P2 wurde wiederum in einen Zwischentank gefahren, während das Retentat R2 bei 20 °C über eine mit Aktivkohle gefüllte Säule (Durchmesser 10 cm, Länge 100 cm) gegeben wurde, wobei die Durchflussgeschwindigkeit etwa 20 L/h betrug. Die vorher gelb gefärbte Lösung verließ die Säule praktisch farblos (Retentat R2*), wurde mit dem Retentat R1 sowie dem Permeat P2 aus den beiden Zwischentanks vereinigt und stand dann für die Herstellung von farblosem Käse zur Verfügung.

### BEISPIEL 2

Nach Durchsatz des gesamten Retentats R2 wurde die nun mit Riboflavin beladene Adsorptionssäule bei 20 °C zunächst in 3 Portionen mit jeweils 10 L Ethanol und dann abschließend mit 10 L Isopropylalkohol gespült. Die vier gelb-orange gefärbten Fraktionen wurden vereinigt und dann im Vakuum vom Lösungsmittel befreit. Zurück blieben 44 g Riboflavin als leuchtend oranger Feststoff.

## Patentansprüche

1. Verfahren zur Herstellung von farbloser Kesselmilch, bei dem man
(a) Kesselmilch einer Ultrafiltration unterwirft und dabei ein erstes Permeat P1 und ein erstes Retentat R1 herstellt, wobei man die Ultrafiltration mit Hilfe von Membranen durchführt, die einen Porendurchmesser von 5.000 bis 50.000 Dalton aufweisen,
(b) das Permeat P1 einer Umkehrosmose unterwirft und dabei ein zweites Permeat P2 und ein zweites Retentat R2 herstellt, wobei man die Umkehrosmose mit semipermeablen Membranen durchgeführt, die eine Trennschärfe von 10 bis 1.000 Dalton aufweisen,
(c) das zweite Retentat R2 mit einem Adsorptionsmittel behandelt und dabei ein weiteres Retentat R2* herstellt,
(d) das so erhaltene Retentat R2* mit dem Retentat R1 und dem Permeat P2 vereinigt.

2. Verfahren nach Anspruch 1, **dadurch gekennzeichnet, dass** man die Ultrafiltration (Schritt a) bei einer Temperatur im Bereich von 10 bis 55 °C durchführt.

3. Verfahren nach Anspruch 2, **dadurch gekennzeichnet, dass** man die Ultrafiltration (Schritt a) bei einer Temperatur im Bereich von 12 bis 20 °C durchführt.

4. Verfahren nach mindestens einem der Ansprüche 1 bis 3, **dadurch gekennzeichnet, dass** man die Ultrafiltration (Schritt a) mit Hilfe von Spiralwickelmembranen oder Platte-Rahmen-Modulen aus Polysulfon oder Polyethylenmembranen durchführt.

5. Verfahren nach mindestens einem der Ansprüche 1 bis 4, **dadurch gekennzeichnet, dass** man die Umkehrosmose (Schritt b) bei einer Temperatur im Bereich von 10 bis 55 °C durchführt.

6. Verfahren nach mindestens einem der Ansprüche 1 bis 5, **dadurch gekennzeichnet, dass** man als Adsorptionsmittel Aktivkohle einsetzt.

7. Verfahren nach mindestens einem der Ansprüche 1 bis 6, **dadurch gekennzeichnet, dass** man als Adsorptionsmittel ein lonenaustauscherharz einsetzt.

8. Verfahren nach mindestens einem der Ansprüche 1 bis 7, **dadurch gekennzeichnet, dass** man die Adsorption bei Temperaturen im Bereich von 10 bis 55 °C durchführt.

9. Verfahren zur Gewinnung von Riboflavin, bei dem man
(a) Kesselmilch einer Ultrafiltration unterwirft und dabei ein erstes Permeat P1 und ein erstes Retentat R1 herstellt, wobei man die Ultrafiltration mit Hilfe von Membranen durchführt, die einen Porendurchmesser von 5.000 bis 50.000 Dalton aufweisen,
(b) das Permeat P1 einer Umkehrosmose unterwirft und dabei ein zweites Permeat P2 und ein zweites Retentat R2 herstellt, wobei man die Umkehrosmose mit semipermeablen Membranen durchgeführt, die eine Trennschärfe von 10 bis 1.000 Dalton aufweisen,
(c) das zweite das Riboflavin enthaltende Retentat R2 mit einem Adsorptionsmittel behandelt und dabei ein weiteres Retentat R2* herstellt, wobei man als Adsorptionsmittel Aktivkohle einsetzt, und
(d) das Adsorptionsmittel mit einem geeigneten Desorptionsmittel behandelt, die darin gelöste Menge an Riboflavin desorbiert und durch Abtrennen des Desorptionsmittels isoliert.

10. Verfahren nach Anspruch 9, **dadurch gekennzeichnet, dass** man Desorptionsmittel Ethanol oder Isopropylalkohol einsetzt.

## Claims

1. Process for the production of colourless vat milk in which
(a) vat milk is subjected to an ultrafiltration and in the course of this a first permeate P1 and a first retentate R1 are produced, wherein the ultrafiltration is carried out using membranes that have a pore diameter from 5.000 to 50.000 Dalton,
(b) the permeate P1 is subjected to a reverse osmosis and in the course of this a second permeate P2 and a second retentate R2 are produced, wherein the reverse osmosis is carried out using semi-permeable membranes that have a selectivity from 10 to 1.000 Dalton,
(c) the second retentate R2 is treated with an adsorbent and in the course of this a further retentate R2* is produced,
(d) the resultant retentate R2* is combined with the retentate R1 and the permeate P2.

2. Process according to Claim 1, **characterized in that** the ultrafiltration (step a) is carried out at a temperature in the range from 10 to 55°C.

3. Process according to Claim 2, **characterized in that** the ultrafiltration (step a) is carried out at a temperature in the range from 12 to 20°C.

4. Process according to at least one of Claims 1 to 3, **characterized in that** the ultrafiltration (step a) is carried out using spiral wound membranes or plate-frame modules made of polysulfone or polyethylene membranes.

5. Process according to at least one of Claims 1 to 4, **characterized in that** the reverse osmosis (step b) is carried out at a temperature in the range from 10 to 55°C.

6. Process according to at least one of Claims 1 to 5, **characterized in that** the adsorbent used is activated carbon.

7. Process according to at least one of Claims 1 to 6, **characterized in that** the adsorbent used is an ion-exchange resin.

8. Process according to at least one of Claims 1 to 7, **characterized in that** the adsorption is carried out at temperatures in the range from 10 to 55°C.

9. Process for obtaining riboflavin, in which
(a) vat milk is subjected to an ultrafiltration and in the course of this a first permeate P1 and a first retentate R1 are produced, wherein the ultrafiltration is carried out using membranes that have a pore diameter from 5.000 to 50.000 Dalton,
(b) the permeate P1 is subjected to a reverse osmosis and in the course of this a second permeate P2 and a second retentate R2 are produced, wherein the reverse osmosis is carried out using semi-permeable membranes that have a selectivity from 10 to 1.000 Dalton,
(c) the second riboflavin-containing retentate R2 is treated with an adsorbent and in the course of this a further retentate R2* is produced, wherein the adsorbent used is activated carbon, and
(d) the adsorbent is treated with a suitable desorbent, the amount of riboflavin dissolved therein is desorbed and is isolated by separating off the desorbent.

10. Process according to claim 9, **characterized in that** the desorbent used is ethanol or isopropyl alcohol.

## Revendications

1. Procédé de fabrication de lait de chaudière incolore, selon lequel
(a) du lait de chaudière est soumis à une ultrafiltration, et un premier perméat P1 et un premier rétentat R1 sont ainsi préparés, l'ultrafiltration étant réalisée à l'aide de membranes qui présentent un diamètre de pores de 5 000 à 50 000 Dalton,
(b) le perméat P1 est soumis à une osmose inverse, et un deuxième perméat P2 et un deuxième rétentat R2 sont ainsi préparés, l'osmose inverse étant réalisée avec des membranes semi-perméables qui présentent une sélectivité de 10 à 1 000 Dalton,
(c) le deuxième rétentat R2 est traité avec un agent d'adsorption et un autre rétentat R2* est ainsi préparé,
(d) le rétentat R2* ainsi obtenu est rassemblé avec le rétentat R1 et le perméat P2.

2. Procédé selon la revendication 1, **caractérisé en ce que** l'ultrafiltration (étape a) est réalisée à une température dans la plage allant de 10 à 55 °C.

3. Procédé selon la revendication 2, **caractérisé en ce que** l'ultrafiltration (étape a) est réalisée à une température dans la plage allant de 12 à 20 °C.

4. Procédé selon au moins l'une quelconque des revendications 1 à 3, **caractérisé en ce que** l'ultrafiltration (étape a) est réalisée à l'aide de membranes enroulées en spirale ou de modules plaques-cadres en polysulfone ou de membranes en polyéthylène.

5. Procédé selon au moins l'une quelconque des revendications 1 à 4, **caractérisé en ce que** l'osmose inverse (étape b) est réalisée à une température dans la plage allant de 10 à 55 °C.

6. Procédé selon au moins l'une quelconque des revendications 1 à 5, **caractérisé en ce que** du charbon actif est utilisé en tant qu'agent d'adsorption.

7. Procédé selon au moins l'une quelconque des revendications 1 à 6, **caractérisé en ce qu'**une résine échangeuse d'ions est utilisée en tant qu'agent d'adsorption.

8. Procédé selon au moins l'une quelconque des revendications 1 à 7, **caractérisé en ce que** l'adsorption est réalisée à des températures dans la plage allant de 10 à 55 °C.

9. Procédé d'obtention de riboflavine, selon lequel
(a) du lait de chaudière est soumis à une ultrafiltration, et un premier perméat P1 et un premier rétentat R1 sont ainsi préparés, l'ultrafiltration étant réalisée à l'aide de membranes qui présentent un diamètre de pores de 5 000 à 50 000 Dalton,
(b) le perméat P1 est soumis à une osmose inverse, et un deuxième perméat P2 et un deuxième rétentat R2 sont ainsi préparés, l'osmose inverse étant réalisée avec des membranes semi-perméables qui présentent une sélectivité de 10 à 1 000 Dalton,
(c) le deuxième rétentat R2 contenant la riboflavine est traité avec un agent d'adsorption et un autre rétentat R2* est ainsi préparé, du charbon actif étant utilisé en tant qu'agent d'adsorption, et
(d) l'agent d'adsorption est traité avec un agent de désorption approprié, la quantité de riboflavine dissoute dans celui-ci est désorbée et isolée par séparation de l'agent de désorption.

10. Procédé selon la revendication 9, **caractérisé en ce que** l'agent de désorption utilisé est l'éthanol ou l'alcool isopropylique.
